# EUROPEAN PATENT APPLICATION

(11) **EP 4 480 671 A1**
(43) Date of publication of application: **25.12.2024**
(21) Application number: 23181118.3
(22) Date of filing: 23.06.2023
(51) Int. Cl.: B29C 51/00, B29C 51/08, B29C 51/14, B32B 5/26, B32B 27/12, B32B 29/02, B29L 31/00, B29K 23/00, B29K 29/00, B65D 65/46, B65D 85/804, B32B 5/02, B32B 27/30

(54) **METHOD FOR MANUFACTURING AN ECOLOGICAL PRODUCT FROM DRYLY PLACED FIBERS**

(71) Applicant: B&T Entwicklungs- und Vermarktungsgesellschaft mbH, 22297 Hamburg (DE)
(72) Inventor: DOEMEN, Ben, 20144 Hamburg (DE)
(74) Representative: Frei Patent Attorneys

(57) **Abstract**

The **method** for manufacturing a **product,** the method comprising
- providing a **stock (110)** of a **first material (11)**, the first material (11), in the stock, constituting a **sheet material** forming a **first layer** comprising a **watersoluble polymer material,**
- producing a **blank structure (10)** comprising superimposing the **first layer** and a **third layer** and, between the first layer and the third layer, a **second layer,** the second layer comprising, in particular at at least 50% by weight, more particularly at at least 75% by weight, a **fibrous material** obtained from **dryly placed fibers;**
- shaping the blank structure (10) in a **molding step.**

## Description

The invention relates to a method for manufacturing a product. It relates to methods according to the opening clauses of the claims and to correspondingly manufactured products. Such methods can be applied to produce ecological products, such as biodegradable and/or compostable products and/or products comprising recycled material.

From US 2021/069942 A1, methods for producing products from dryly placed fibers, more particularly from dry-formed cellulose fibers are known. In these methods, a multilayer cellulose blank structure is formed, comprising a middle layer of dry-formed cellulose fibers and one or two further layers; and subsequently, said blank structure is formed using a mold. For creating the blank structure from the layers, the layers are superimposed, and then compacted by moving them through a pair of rollers which are pushed against one another with a force (pressurized rollers).

In a first type of embodiments in said US 2021/069942 A1, one or more additives altering the mechanical, hydrophobic, and/or oleophobic properties of the product are added to the formed multi-layer cellulose blank structure.

In a second type of embodiments in said US 2021/069942 A1, a layer to become part of the blank structure in a continuous process is unwound from a roll, then an additive is applied to the unwound layer, and then the layer with the freshly applied additive is superimposed with further layers in order to eventually form the blank structure using the pressurized pair of rollers compacting the superimposed layers. The application of the additive is accomplished either by sprinkling or spraying of the additive to distribute the additive on top of the unwound layer, or by transferring the additive from a tray to the unwound layer using an application roller. However, in any event, in the second type of embodiments, the additive is applied "in-situ", in other words, the additive is added to the just unwound layer just before superimposing the layers and compacting them using the pressurized pair of rollers. The additive is applied only after the process of producing the blank structure has been started.

Furthermore, according to said US 2021/069942 A1, the additives to be added to a further layer of cellulose fibers cannot be thermoplastic fibers, since those could melt and impact the bonding between the cellulose fibers of said further layer.

The inventor realized that the methods disclosed in said US 2021/069942 A1 provide a rather limited flexibility regarding the range of producible blank structures and materials, respectively. On the one hand, the choice of materials for the additives is limited by the way of applying the additive and by the position of the step of addition of the additive in the sequence of process steps. On the other hand, there are strong limitations regarding the possible location of the additive in the blank structure, as the additive basically can form only a layer or coating on its own, applied to another layer. And furthermore, the choice of ways of producing a layer comprising an additive is very limited, as the additive application has to be compatible with the "in-situ" way of processing and also with the process parameters applied, such as with the parameters (mainly the pressure, possibly also the temperature) regarding the pressurized rollers and with the feed rate and possibly also the molding parameters - and thereby, the choice of parameters applicable for producing a layer comprising an additive is limited.

The inventor contemplated a way of overcoming, at least in part, these shortcomings of the prior art. He developed the idea of separating the production of a layer comprising an additive, more particularly comprising a water-soluble polymer material, from the production of a blank structure comprising this layer amongst other layers and including a layer comprising a fibrous material obtained from dryly placed fibers. From a particular point of view, he developed the idea of pre-producing said layer comprising an additive and a water-soluble polymer material, respectively. Materials and process parameters for (pre-) producing said layer can in this case be selected much more independently from the following process steps such as the formation of the (multilayer) blank structure. And also, differently structured additive-containing layers and/or further kinds of distributions of the additive (more specifically: of the water-soluble polymer material) in the blank structure can be produced.

Since for various envisaged products to be produced, the surface properties of a layer containing fibrous material obtained from dryly placed fibers can be considered insufficient, the blank structure comprises at least three layers, i.e. at least one in addition to a first one comprising the water-soluble polymer material and to the second one comprising the fibrous material obtained from dryly placed fibers.

One object of the invention is to create a method for manufacturing a product that does not have the disadvantages mentioned above. And, consequently, correspondingly manufactured products shall be provided.

Another object of the invention is to provide a method for manufacturing a product in a particularly ecological (environmentally friendly) way.

Another object of the invention is to provide a method for manufacturing a product which is particularly ecological (environmentally friendly), e.g., a biodegradable (in particular compostable) product and/or a product comprising recycled matter.

Another object of the invention is to provide a method for manufacturing a product which can be recycled in wastepaper recycling.

Another object of the invention is to provide an increased amount of flexibility in a method for manufacturing a product, regarding properties of the product, in particular regarding material properties of the product.

Another object of the invention is to provide a method for manufacturing a product which makes possible to very flexibly tailor properties, in particular material properties, of the product.

Another object of the invention is to provide a method for manufacturing a product which comprises an oxygen barrier, in particular for protecting a good comprised or contained in the product, e.g., foodstuff, from oxygen.

Another object of the invention is to provide a method for manufacturing a product which exhibits a good resistance against alcohol.

Another object of the invention is to provide a method for manufacturing a product which comprises a fibrous material and/or a cellulose-based fiber material while largely preventing abrasion of said fibrous material and/or said cellulose-based fiber material.

Another object of the invention is to provide a method for manufacturing a product which comprises a fibrous material and/or a cellulose-based fiber material and which simultaneously provides scratch protection, e.g., by providing a smooth surface of the product.

Further objects and various advantages emerge from the description and embodiments below.

At least one of these objects is at least partially achieved by methods according to the patent claims and by correspondingly produced products.

In particular, the method can be the following method:
A **method** for manufacturing a **product,** the method comprising
- providing a **stock** of a **first material,** the first material, in the stock, constituting a **sheet material** forming a **first layer** comprising a **water-soluble polymer material;**
- producing a **blank structure** comprising superimposing the **first layer** and a **third layer** and, between the first layer and the third layer, a **second layer,** the second layer comprising, in particular at at least 50% by weight, more particularly at at least 75% by weight, a **fibrous material** obtained from **dryly placed fibers;**
- shaping the blank structure in a **molding step.**

Since, in the method, a stock of the first material is provided, the first material in the stock has been produced in advance. And thus, material(s) and processing parameters for producing this first material can be chosen rather freely. To give an example, the blank structure may comprise a layer, e.g., the second layer or the third layer or a further layer, which may not be exposed to a temperature exceeding a threshold temperature. Then it would be no problem to produce in advance a first layer requiring a temperature exceeding this threshold temperature during its production. The pre-produced stack of such a high-temperature processed first layer could then be used in producing the blank structure at suitably low temperatures. On the other hand, applying the high temperature in a prior art "in-situ" process would be unfeasible, as it would be unfeasible to apply, in the process, the high temperature for the first layer and nevertheless not exceed the threshold temperature when forming the blank structure.

The stock of the first material can comprise, e.g., the sheet material wound to a roll. Or the stock of the first material can comprise, e.g., a layered continuous sheet of the sheet material. Other forms of stocks of the first material are possible. The sheet material wound to a roll, however, can have practical advantages in the production of the product.

The fibrous material in the second layer can in particular be renewable material. This way, the product can be particularly environmentally friendly.

The fibrous material in the second layer can in particular be recycled material, such as wastepaper or material obtained from wastepaper. This way, the product can be particularly environmentally friendly.

The fibrous material can comprise **plant fibers** at at least 70% by weight, more particularly at at least 85% by weight. The plant fibers furthermore can be **shredded and/or milled** plant fibers. Plant fibers are renewable and can be compostable and/or biodegradable, thus making the product particularly environmentally friendly.

The fibrous material can comprise **recycled material** at at least 70% by weight, more particularly at at least 85% by weight. This can make the product particularly environmentally friendly.

The fibrous material can comprise both, **plant fibers and recycled material.** Together, the plant fibers and the recycled material can make up for at least 70% by weight, more particularly at at least 85% by weight of the fibrous material. This can make the product particularly environmentally friendly.

The fibrous material can be a nonwoven fibrous material.

**Dryly placing fibers** means, in other words, that fibers are placed in a dry fashion, i.e. with a gas as a carrying medium, such as with air. In this "dry", gas-based fashion, fibers are placed in order to form the fibrous material or a **precursor** of the fibrous material. E.g., the fibrous material can be obtained from the precursor fibrous material by applying pressure, such as to compact the fibers and/or to achieve an increased mechanical stability, e.g., by increasing entanglement between the fibers.

Dryly placing fibers differs from wetly placing fibers, as in the latter case a liquid, usually water, is used as a carrying medium for placement of the fibers. Such (traditional) pulp-based fibrous materials have to be freed from the liquid carrying medium which usually is accomplished by heating which however results in a high energy consumption.

The provision of **dryly placed fibers** is thus very energy saving compared to the provision of wetly placed fibers, in particular because water in which the fibers are suspended in conventional pulp-based processes needs to be heated.

For many applications, a layer containing dryly placed fibers tends to exhibit a too rough surface. This problem can be mitigated by **sandwiching** that (second) layer between further layers, such as between the first and the third layer.

In the blank structure, the first layer can be arranged in direct contact with the second layer. However, in other embodiments, in the blank structure, one or more further layers are present between the **first** layer and the second layer.

In the blank structure, the third layer can be arranged in direct contact with the second layer. However, in other embodiments, in the blank structure, one or more further layers are present between the third layer and the second layer.

The provision of the water-soluble polymer material in the first layer can improve the properties of the product, while maintaining environmental compatibility, in particular when one or more of
- a poly(vinyl alcohol) (PVOH), in particular a vinyl-alcohol copolymer;
- a cellulose-ether polymer;
- a butenediol-vinylalcohol-copolymer (BVOH);
- an ethylene-vinylalcohol-copolymers (EVOH);
is used as the water-soluble polymer material.

For example, the cohesion of the first layer can be particularly high due to providing the water-soluble polymer material, and/or a particularly flat or smooth surface of the first layer and/or of the product can result from the use of the water-soluble polymer material.

Furthermore, the water-soluble polymer material can function as an oxygen barrier and/or as a vapor barrier. This can be very valuable when the product is a packaging or a package, but also in case of other products.

More specifically, the first layer and/or the blank structure shaped in a molding step can exhibit an **oxygen transmission rate** (OTR), at 23°C and a relative humidity of 50%, of at most 3 cm³/m² per day, in particular of at most 1 cm³/m² per day, more particularly of at most 0.2 cm³/m² per day. Especially when oxygen-sensitive material, such as foodstuff, is to be packaged, this can effect an increased shelf life. This can be particularly important, e.g., when it comes to packaging coffee, in particular ground coffee.

And the first layer and/or the blank structure shaped in a molding step can exhibit a **water vapor transmission rate (WVTR),** at 23°C and a relative humidity of 85%, of at most 25 g/m² per day, in particular of at most 15 g/m² per day, more particularly of at most 10 g/m² per day. The WVTR in this disclosure can in particular be determined according to ISO 15106-2 (more particularly: ISO 15106-2:2015).

Especially when material sensitive to water, such as various foodstuffs, is to be packaged, this can result in an increased shelf life. This can be particularly important, e.g., when it comes to packaging coffee, in particular ground coffee.

Furthermore, the water-soluble polymer material can make it possible to maintain environmental compatibility of the product, at least to a high extent. E.g., the product can be biodegradable or even compostable, despite of the water-soluble polymer material.

In some embodiments, the first layer comprises, in addition to the water-soluble polymer material, a **further material,** such as a fiber material, e.g., a cellulose-based fiber material.

In some embodiments, the further material and the water-soluble polymer material are present in the first layer in an intermixed way. This is the case, e.g., when the further material is a fiber material and the water-soluble polymer material can be interdispersed between the fibers of the fiber material. This can result in improved haptics of the product, more particularly in a particularly agreeable or "natural" touch experience when manually handling the product; especially in case the water-soluble polymer material comprises (in particular: is) PVOH.

In some embodiments, the further material and the water-soluble polymer material are present in the first layer in an layered way. This is the case, e.g., when the first layer comprises a first sub-layer comprising the water-soluble polymer material and a second sub-layer comprising the further material. For example, if the first sub-layer is arranged between the second layer and the second sub-layer, this way the first sub-layer can provide a good barrier (especially if embodied as a foil) while on the other hand, haptics of the product can be predominantly determined by the second sub-layer, which can result in a particularly agreeable or "natural" touch experience when manually handling the product, if the further material is a cellulose-based fiber material.

In some embodiments, the water-soluble polymer material comprises a poly(vinyl alcohol) (PVOH), more particularly the water-soluble polymer material is a poly(vinyl alcohol) (PVOH). The poly(vinyl alcohol) can in particular be a vinyl-alcohol copolymer.

In some embodiments, the water-soluble polymer material comprises a cellulose-ether polymer, more particularly the water-soluble polymer material is a cellulose-ether polymer.

In some embodiments, the water-soluble polymer material comprises a butenediol-vinylalcohol-copolymer (BVOH), more particularly the water-soluble polymer material is a butenediol-vinylalcohol-copolymer (BVOH). BVOH can have a particularly good solubility, especially at high degrees of hydrolysis, such as close to or at 100%.

In some embodiments, the water-soluble polymer material comprises a ethylene-vinylalcohol-copolymers (EVOH), more particularly the water-soluble polymer material is a ethylene-vinylalcohol-copolymers (EVOH). EVOH can provide, especially at high ethylene contents, a particularly good oxygen barrier function, in particular at high humidities.

The water-soluble polymer, in particular the PVOH, can have a degree of hydrolysis of 70% to 99,9%. The degree of saponification can control the performance to the oxygen transmission barrier. A higher saponification can, for instance, improve the oxygen transmission barrier performance.

Vinyl-alcohol containing polymer in the water soluble polymer material can comprise, e.g., more than 75%, in particular more than 90% monomer units carrying an OH unit each.

In some embodiments, the first layer comprises (in particular: essentially is) a sheet essentially composed of the water-soluble polymer material, in particular wherein the sheet comprises the water-soluble polymer material at at least 80% by weight. E.g., the sheet can be a foil essentially made of the water-soluble polymer material. This is a good way to achieve one or more of: a barrier function, such as an oxygen barrier function, resistance to alcohol, scratch protection (e.g., by creating a smooth product surface), inhibition of abrasion of the fibrous material otherwise potentially contaminating goods (e.g., foodstuffs) in contact with the product, and usability with foodstuffs (by inhibiting migration of substances from the fibrous material to the foodstuffs, wherein the latter is particularly relevant in case the fibrous material is, at least in part, recycled material.

In some embodiments, the foil, in the product, has a thickness of at least 10 µm, more particularly of at least 15 µm. This way, a suitable oxygen barrier can be established by the foil, especially in case the water-soluble polymer material comprises (in particular: is) PVOH.

In some embodiments, the first layer comprises, in addition to the water-soluble polymer material, a **cellulose-based fiber material.** The first layer can comprise the water-soluble polymer material in particular at at least 30% by weight, more particularly at at least 40% by weight, and the cellulose-based fiber material at at least 25% by weight, more particularly at at least 40% by weight. The first layer can be, e.g., essentially comprised of the water-soluble polymer material and the cellulose-based fiber material. The cellulose-based fiber material can comprise (or essentially be), e.g., waste paper fibers. The cellulose-based fiber material can form, e.g., cellulose based nonwoven.

The combination of water-soluble polymer material and the cellulose-based fiber material can be particularly advantageuos because it can provide a good mechanical stability, wherein the cohesion between the fibers of the cellulose-based fiber material can be strongly increased by the water-soluble polymer material, and barrier properties, such as oxygen barrier and/or vapor barrier properties of the first layer can be very good - and all this while the first layer can be very environmentally friendly, e.g., compostable and/or biodegradable. Depending on the details, such a first layer also can provide usability with foodstuff, resistance to alcohol, and scratch protection, and abrasion of the cellulose-based fiber material can be minimized (and even completely impeded), so as to protect goods in contact with the product, e.g., foodstuffs, from contamination due to such abrasion.

In some embodiments, the first layer comprises (in particular: essentially is) a sheet of a **paper compound material** comprising a **cellulose based nonwoven** and the water-soluble polymer material, in particular wherein the paper compound material comprises at at least 50% the cellulose based nonwoven and at at least 25% the water-soluble polymer material. A paper in this regard means, more specifically, a pulp-based material comprising (wetly placed) cellulose fibers, in particular at at least 40% by weight, more particularly at at least 60% by weight, forming a nonwoven. The sheet can thus be, e.g., a paper, augmented with the water-soluble polymer material, e.g., for increasing cohesion between the fibers of the cellulose based nonwoven and/or for achieving barrier properties as described above. Fibers of the cellulose based nonwoven can comprise (or essentially be), e.g., waste paper fibers.

In some embodiments, the first layer comprises a sheet comprising (in particular; essentially being) a **first sub-layer** and a **second sub-layer,** wherein the first layer is essentially composed of the water-soluble polymer material, in particular comprising at at least 80 % by weight the water-soluble polymer material. And the second sub-layer adheres to the first sub-layer, in particular directly to the first sub-layer. In particular, the second sub-layer can comprise (or essentially is) a **cellulose based nonwoven,** wherein, in particular, the second sub-layer comprises the cellulose based nonwoven at at least 60% by weight, more particularly at at least 80% by weight.

Such a layered first layer can be produced, e.g., by applying the water-soluble polymer material to merely a single side of a pre-fabricated paper. In some embodiments, the water-soluble polymer material is applied to both sides of a pre-fabricated paper. In this case, the first layer comprises a third sub-layer. In case the first sub-layer is arranged between the second layer and the cellulose based nonwoven of the second sub-layer, simultaneously a barrier function (e.g., inhibiting oxygen transmission) agreeable / "natural" haptics can be achieved.

In some embodiments, the third layer comprises a water-soluble polymer material. This water-soluble polymer material can be identical to or different from the water-soluble polymer material in the first layer. The water-soluble polymer material in the third layer can comprise one or more of
- a poly(vinyl alcohol) (PVOH), in particular a vinyl-alcohol copolymer;
- a cellulose-ether polymer;
- a butenediol-vinylalcohol-copolymer (BVOH);
- an ethylene-vinylalcohol-copolymers (EVOH).

In some embodiments, the third layer comprises a cellulose-based fiber material, in particular a cellulose based nonwoven. The third layer can comprise, in addition, a water-soluble polymer material as just described.

In some embodiments, the third layer comprises both, said cellulose-based fiber material and said water-soluble polymer material.

In some embodiments, in the molding step,
- the product;
- a part of the product;
- a precursor of the product; or
- a precursor of a part of the product;
   is produced.

In some embodiments, the molding step comprises
- insertion of the blank structure or of a portion thereof into a mold; and
- application of heat and pressure to the blank structure.

This way, a suitable shape and stability can be achievable.

E.g., pressures above 2 MPa can be applied, in particular pressures between 4 MPa and 20 MPa. And temperatures above 70°C can be applied, more particularly temperatures between 100°C and 300°C.

In some embodiments, the blank structure as shaped in the molding step is biodegradable and/or compostable. More particularly, the product can be biodegradable and/or compostable. This can be very environmentally friendly.

In some embodiments, the blank structure as shaped in the molding step comprises at at least 50% by weight, more particularly at at least 75% by weight, even more particularly at at least 90% by weight, materials which are recycled or renewable. More particularly, the product can comprise at at least 50% by weight, more particularly at at least 75% by weight, even more particularly at at least 90% by weight, materials which are recycled or renewable. This can be very environmentally friendly.

In some embodiments, producing the blank structure furthermore comprises joining the first, the second and the third layer in a joining process before shaping the blank structure in the molding step. The joining process can comprise, e.g., feeding the superimposed first, second and third layers (and optionally also further superimposed layers) between pressurized rollers. The joining can comprise compacting the superimposed layers.

In some embodiments, the product is a **constituent** of a **packaging** for foodstuff, in particular of a packaging for packaging roasted coffee. The roasted coffee can be whole coffee beans or ground beans (coffee powder). Thus, particularly environmentally friendly packagings can be produced. In some embodiments, said constituent is identical to the packaging.

In some embodiments, the product is a capsule-type **portion package** containing ground coffee. The portion package can comprise, more particularly, a **main part** and a **lid part,** wherein at least one of the main part and the lid part or at least one of a precursor of the main part and a precursor of the lid part is produced in the molding step. Thus, particularly environmentally friendly capsule-type portion packages can be produced, in particular, biodegradable and/or compostable capsule-type portion packages can be produced, and/or capsule-type portion packages can be produced which comprise a large amount of recyled and/or renewable material.

The method can furthermore comprise sealing the main part and the lid part to one another. And it can comprise, before the sealing, filling ground coffee into the main part. Regarding the sealing, it an be advantageous to provide that the surface portions of the main part and of the lid part, respectively, which are to be sealed to one another to seal the main part to the lid part are made of the water-soluble polymer material, as this can simplify the sealing (which may be accomplished by, e.g., glueing or welding or by other bonding techniques). A fibrous surface is likely to be more problematic in this regard. In particular, thermal sealing can be applied, so as to bond the water-soluble polymer material of the main part to the water-soluble polymer material of the lid part by heating one or both.

In some embodiments, the water-soluble polymer is cold soluble, meaning that the water-soluble polymer is soluble in cold water. Cold water in this regard can be water of a temperature of 40 °C or less, in particular of 38°C or less, more particularly of 35°C or less, most particularly of 30°C or less. Such a solubility in water can facilitate biodegradation and/or composting of the product. And it can facilitate an integration of the product in a paper recycling cycle, in particular in paper recycling according to DIN EN 13430 (as of the end of 2021, or DIN EN 13430:2004), DIN EN being a European standard.

In the present disclosure, compostable can more specifically mean home compostable.

In the present disclosure, "biodegradable" can, more specifically, mean biologically degradable according to the European standard EN 13432 (more particularly: EN 13432:2004). In addition, or as an alternative, it can mean biologically degradable according to the European standard EN 14995 (more particularly EN 14995:2006). Thus "biodegradable" especially can refer to "biologically degradable" according to EN 13432 and/or according to EN 14995. In the present disclosure, "compostable" or "home compostable" can, more specifically, mean compostable or home compostable according to the European standard EN 13432 (more particularly: EN 13432:2004) for packaging and/or according to the European standard EN14995 (more particularly EN 14995:2006) for plastics/synthetic materials.

As will be readily understood, features and advantages mentioned herein with respect to the method can reflect in and analogously apply to a correspondingly produced product and vice versa.

Further embodiments and advantages emerge from the following description and the enclosed figures and from the dependent claims.

Below, the invention is described in more detail by means of examples and the included drawings. In the drawings, same reference numerals refer to same or analogous elements. The figures show:
- Fig. 1: a schematic cross-sectional illustration of a first part of a method;
- Fig. 2: a schematic cross-sectional illustration of a second part of said method;
- Fig. 3: a schematic illustration of a cross-section of a blank structure;
- Fig. 4: an illustration of a capsule-type portion package;
- Fig. 5: a perspective view of a lid part of the capsule-type portion package of Fig. 4.

The described embodiments are meant as examples or for clarifying the invention and shall not limit the invention.

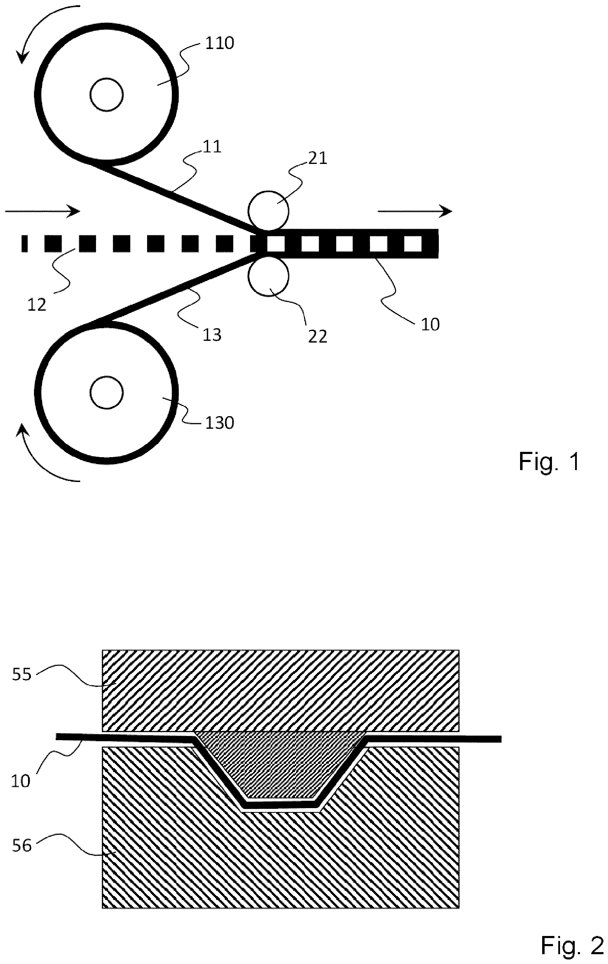

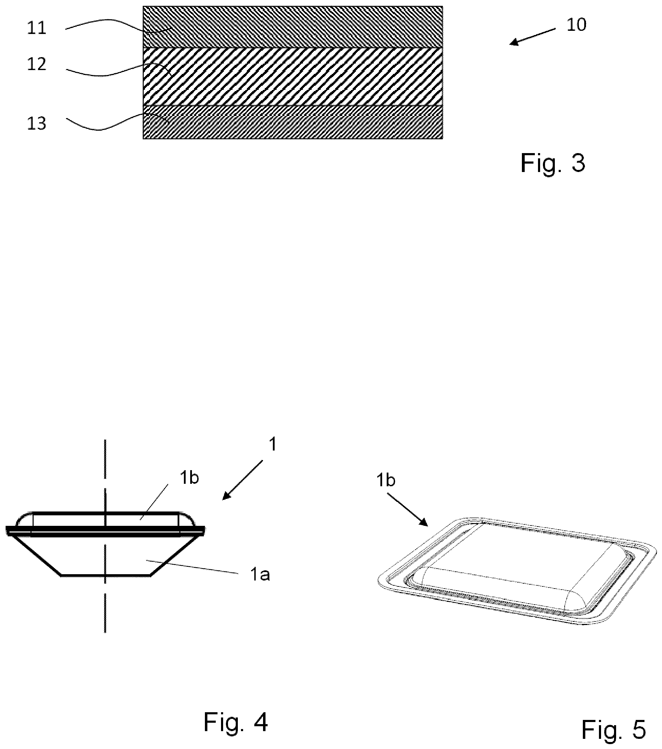

Fig. 1 shows a schematic cross-sectional illustration of a first part of a method for manufacturing a product, where a blank structure 10 is produced, and Fig. 2 shows a schematic cross-sectional illustration of a second part of this method, where the blank structure 10 is shaped in a molding step. Figs. 4 and 5 show exemplary products, namely a capsule-type portion package and its main part and lid part, respectively.

As illustrated in Fig. 1, a first material constituting a sheet material forming a first layer 11 is unwound from a stock 110 embodied as a roll of the sheet material and is fed through a pair of rollers 21, 22. The arrows in Fig. 1 indicate the direction of movement of the layers and materials. And a third material constituting a sheet material forming a third layer 13 is unwound from a stock 130 embodied as a roll of the sheet material and is fed through the pair of rollers 21, 22. And also a second material constituting a sheet material forming a second layer 12 (in Fig. 1 drawn in a thick dashed fashion for better visibility) is fed through the pair of rollers 21, 22.

Thus, the three layers 11, 12, 13 are superimposed and are joined by the rollers 2.

It is possible to provide, in the blank structure, one or more further layers (not shown).

The rollers 21, 22 are pressurized, e.g., to enhance cohesion between the layers 11, 12, 13 of the blank structure 10. They may be heated, too.

Second layer 12 forms an inner layer and comprises, e.g., at at least 50% by weight, a fibrous material obtained from dryly placed fibers, e.g., from dryly placed plant fibers or from dryly placed recycled material fibers such as from dryly placed wasterpaper fibers.

First layer 11 comprises a water-soluble polymer material, e.g., a PVOH (other examples have been described above). The water-soluble polymer material can improve and/or tailor properties of the blank structure and of the product, while maintaining environmental friendliness. In addition, the first layer 11 can comprise a further material, in particular paper or a cellulose based nonwoven.

The water-soluble polymer material and the further material can be present in the first layer in an intermixed way. As an alternative or in addition, they can be arranged in a layered way, such as in form of a first sub-layer made of (or at least comprising) the water-soluble polymer material and a second sub-layer made of (or at least comprising) the further material.

The third layer 13 can be, e.g., composed identically to the first layer.

After the blank structure 10 has been produced, it is shaped using a mold comprising mold parts 55 and 56 as illustrated in Fig. 2. The formerly flat blank structure is given a more three-dimensional shape. Heat and pressure can be applied in the molding step. This way, the product or a part of the product can be produced. Or, in particular, when subsequent processing steps will be applied, a precursor of the product or of the part of the product can be obtained in the molding step.

For example, the product can be a packaging such as a packaging for foodstuff. The product can be, e.g., a capsule-type portion package for ground coffee as illustrated in Fig. 4 comprising a main part 1a and a lid part 1b. The method, in particular in this case, can comprise filling the main part 1a with ground coffee and sealing the main part 1a and the lid part 1b to one another. The product can also be the main part 1a as shown in Fig. 4 or the lid part 1b shown in Fig. 5.

Especially for capsule-type portion packages, biodegradability and/or compostability can be very valuable properties. Also very valuable can be to produce the product to a large extent from renewable and/or from recycled materials. All this can be the case using the described method.

Very generally: By providing the first layer and the first material, respectively, in form of a stock, process steps for producing the first material need not be carried out at the time and place of production of the blank structure, but can be carried out beforehand. And thus, it is possible to separately optimize process parameters such as pressures, temperatures, feed rates separately for the production of the first layer and for subsequent processes such as the production of the blank structure and to in fact use - compatibility provided - such optimized parameters. Compromises regarding processing parameters, which are likely to be necessary when incorporating the production of the first layer into the process in which the blank structure is produced, need not be made. Likewise, the choice of materials for the first layer and for the blank structure, respectively, is less limited when providing the first layer from a stock, i.e. when using a pre-fabricated first layer (and first material), in particular in the sense that the first layer (and first material) already exists before the process of producing the blank structure is started.

## Claims

1. A **method** for manufacturing a **product,** the method comprising
- providing a **stock** of a **first material,** the first material, in the stock, constituting a **sheet material** forming a **first layer** comprising a **water-soluble polymer material;**
- producing a **blank structure** comprising superimposing the **first layer** and a **third layer** and, between the first layer and the third layer, a **second layer,** the second layer comprising, in particular at at least 50% by weight, more particularly at at least 75% by weight, a **fibrous material** obtained from **dryly placed fibers;**
- shaping the blank structure in a **molding step.**

2. The method according to claim 1, wherein the first layer comprises a sheet essentially composed of the water-soluble polymer material, in particular comprising at at least 80 % by weight the water-soluble polymer material.

3. The method according to claim 1, wherein the first layer comprises, in addition to the water-soluble polymer material, a **cellulose-based fiber material.**

4. The method according to claim 1, wherein the first layer comprises a sheet of a **paper compound material** comprising a **cellulose based nonwoven** and the water-soluble polymer material, in particular wherein the paper compound material comprises at at least 50% the cellulose based nonwoven and at at least 25% the water-soluble polymer material.

5. The method according to claim 1, wherein the first layer comprises a sheet comprising a **first sub-layer** and a **second sub-layer,** wherein the first layer is essentially composed of the water-soluble polymer material, in particular comprising at at least 80 % by weight the water-soluble polymer material, and wherein the second sub-layer adheres to the first sub-layer, in particular wherein the second sub-layer comprises a **cellulose based nonwoven,** in particular wherein the second sub-layer comprises the cellulose based nonwoven at at least 60% by weight.

6. The method according to one of claims 1 to 5, wherein the water-soluble polymer material comprises one or more of
- a poly(vinyl alcohol), in particular a vinyl-alcohol copolymer;
- a cellulose-ether polymer;
- a butenediol-vinylalcohol-copolymer;
- an ethylene-vinylalcohol-copolymer.

7. The method according to one of claims 1 to 6, wherein the fibrous material comprises **plant fibers** at at least 70% by weight, more particularly at at least 85% by weight, and in particular wherein the plant fibers are **shredded and/or milled** plant fibers.

8. The method according to one of claims 1 to 6, wherein the fibrous material comprises **recycled fibers** at at least 70% by weight, more particularly at at least 85% by weight, and in particular wherein the recycled fibers are wastepaper fibers.

9. The method according to one of claims 1 to 8, wherein the third layer comprises a cellulose-based fiber material, in particular a cellulose based nonwoven.

10. The method according to one of claims 1 to 9, wherein in the molding step,
- the product;
- a part of the product;
- a precursor of the product; or
- a precursor of a part of the product; is produced.

11. The method according to one of claims 1 to 10, wherein the molding step comprises
- insertion of the blank structure or of a portion thereof into a mold; and
- application of heat and pressure to the blank structure.

12. The method according to one of claims 1 to 11, wherein the blank structure as shaped in the molding step is biodegradable and/or compostable, in particular wherein the product is biodegradable and/or compostable.

13. The method according to one of claims 1 to 12, wherein the stock of the first material comprises
- the sheet material wound to a roll, or
- a layered continuous sheet of the sheet material.

14. The method according to one of claims 1 to 13, wherein the product is a **constituent** of a **packaging** for foodstuff, in particular of a packaging for packaging roasted coffee.

15. The method according to one of claims 1 to 14, wherein the product is a capsule-type **portion package** containing ground coffee, the portion package comprising a **main part** and a **lid part,** wherein at least one of the main part and the lid part or at least one of a precursor of the main part and a precursor of the lid part is produced in the molding step.
